# EUROPEAN PATENT APPLICATION

(11) **EP 4 621 655 A1**
(43) Date of publication of application: **24.09.2025**
(21) Application number: 23898406.6
(22) Date of filing: 04.12.2023
(51) Int. Cl.: G06N 3/09, G06N 3/063, G06N 20/00, G06T 7/00

(54) **MACHINE LEARNING-BASED ANOMALY DETECTION DEVICE AND METHOD**

(30) Priority: 02.12.2022 KR 20220166645
(71) Applicant: LG Management Development Institute Co., Ltd., Seoul 07336 (KR)
(72) Inventor: KANG, Byung Jun, Yongin-si, Gyeonggi-do 16899 (KR); KIM, Sang Yun, Gimpo-si, Gyeonggi-do 10113 (KR); HYUN, Jee Ho, Seoul 07573 (KR); KOH, Young San, Seoul 04381 (KR); CUI, Run, Seoul 07803 (KR); KIM, Seung Hwan, Seongnam-si, Gyeonggi-do 13586 (KR)
(74) Representative: BCKIP Part mbB
(86) International application number: PCT/KR2023/019760
(87) International publication number: WO 2024/117883

(57) **Abstract**

A computing device for performing anomaly detection according to the present disclosure includes a memory including at least one memory bank that is a logical area, and a processor configured to train a neural network by using at least one function module, generating a reduced feature extraction module, generating the memory bank on the basis of reduced feature data generated from the reduced feature extraction module, and determining whether inspection data is normal by using the generated reduced feature extraction module and the memory bank.

## Description

### [TECHNICAL FIELD]

The present disclosure relates to a machine learning-based anomaly detection device and method. More specifically, the present disclosure relates to an anomaly detection technique using deep learning-based machine learning.

### [BACKGROUND ART]

Anomaly detection is defined as a technique for detecting anomaly data that is distinct from normal data. A common issue in anomaly detection techniques using deep learning classification models is the exhaustion of anomaly data. Training a deep learning classification model requires a large amount of normal and anomaly data. However, since most of the data that may be obtained naturally is normal data, it is difficult for deep learning classification models to learn anomaly data.

To address these issues, various techniques such as conventional data augmentation and self-supervised learning have been studied, and as part of this study, technology that may detect anomaly data by training only with normal data is being continuously studied.

(Related Art Document 1) Ting Chen, Simon Kornblith, Mohammad Norouzi, Geoffrey Hinton, "Simple Framework for Contrastive Learning of Visual Representations" ICML 2020

### [DETAILED DESCRIPTION OF INVENTION]

### [TECHNICAL PROBLEMS]

An aspect of the present disclosure is directed to implementing a machine learning-based anomaly detection module capable of detecting anomaly data using only normal data.

In addition, an aspect of the present disclosure is directed to implementing an anomaly detection module through data amplification and supervised learning in order to address the issue of insufficient anomaly data for training an anomaly detection module that detects anomalies in a manufacturing target in a manufacturing process.

The aspects of the present disclosure are not limited to those mentioned above, and other aspects not mentioned herein will be clearly understood by those skilled in the art from the following description.

### [TECHNICAL SOLUTION]

A computing device for performing anomaly detection according to an aspect of the present disclosure includes: a memory including at least one memory bank that is a logical area; and a processor configured to train a neural network by using at least one function module, generating a reduced feature extraction module, generating the memory bank based on reduced feature data generated from the reduced feature extraction module, and determining whether inspection data is normal by using the generated reduced feature extraction module and the memory bank, wherein the processor may perform an operation of generating the reduced feature extraction module by: training a feature extraction network using one or more pieces of first training data; generating one or more pieces of feature patch data from one or more pieces of second training data using the trained feature extraction network; training a dimensionality reduction network using the one or more pieces of feature patch data; and generating the reduced feature data from the feature patch data using the trained dimensionality reduction network.

In addition, the feature extraction network according to an embodiment of the present disclosure may be trained to determine a distance or similarity between two or more pieces of training data.

In addition, the manipulation in the manner preset above according to an embodiment of the present disclosure may include generating an anomaly class sample having a different class from one or more pieces of data included in a single class data set or adding dummy data to the single class data set.

In addition, the feature extraction network according to an embodiment of the present disclosure may be additionally trained to infer a method in which the anomaly class sample is generated.

In addition, the feature extraction network according to an embodiment of the present disclosure includes one or more feature map generation layers, wherein the one or more feature map generation layers may generate at least one feature map, wherein the feature patch data may be generated from the at least one feature map, and wherein the at least one feature map may include at least one highly abstracted feature map.

In addition, the at least one feature map according to an embodiment of the present disclosure may include the feature map in all of the feature map generation layers of the feature extraction network.

In addition, the dimensionality reduction network according to an embodiment of the present disclosure may allow the reduced feature data to imply location information in a feature map generated by the training data of the feature patch data or the feature extraction network.

In addition, the dimensionality reduction network according to an embodiment of the present disclosure may be trained by learning a distance or similarity between the one or more pieces of feature patch data.

In addition, the dimensionality reduction network according to an embodiment of the present disclosure may be additionally trained to infer location information in a feature map generated by the feature extraction network or in the training data of the feature patch data based on the reduced feature data.

In addition, the generation of the memory bank from the reduced feature data according to an embodiment of the present disclosure may include classifying one or more pieces of the reduced feature data into one or more subsets.

In addition, the determination of whether the inspection data is normal by using the generated reduced feature extraction module according to an embodiment of the present disclosure may include: generating the reduced feature data for the inspection data by using the reduced feature extraction module; identifying a nearest subset of the reduced feature data for the inspection data among one or more subsets included in the memory bank by using the reduced feature data; computing an anomaly score by using the nearest subset and the reduced feature data, and detecting whether the inspection data is anomalistic based on the anomaly score.

In addition, a machine learning-based anomaly detection method performed by a computing device according to an aspect of the present disclosure may include: generating a reduced feature extraction module; generating a memory bank based on reduced feature data generated from the reduced feature extraction module; and determining whether inspection data is normal by using the generated reduced feature extraction module and the memory bank, wherein the generation of the reduced feature extraction module may include: training a feature extraction network using one or more pieces of first training data; generating one or more pieces of feature patch data from one or more pieces of second training data using the trained feature extraction network; and generating one or more pieces of the reduced feature data from the one or more pieces of feature patch data using a dimensionality reduction network.

In addition, a computer program stored in a computer-readable storage medium according to an aspect of the present disclosure, when executed on a processor, performs the following operations for performing anomaly detection, wherein the operations include: an operation of generating a reduced feature extraction module, an operation of generating a memory bank based on reduced feature data generated from the reduced feature extraction module, and an operation of determining whether inspection data is normal by using the generated reduced feature extraction module and the memory bank, wherein the operation of generating the reduced feature extraction module may include an operation of training a feature extraction network using one or more pieces of first training data, an operation of generating one or more pieces of feature patch data from one or more pieces of second training data using the trained feature extraction network, and an operation of generating one or more pieces of the reduced feature data from the one or more pieces of feature patch data using a dimensionality reduction network.

In addition, a computer-readable recording medium recording a computer program for executing a method for implementing the present disclosure may be further provided.

### [EFFECT OF INVENTION]

Anomaly data can be detected using only normal data. Accordingly, an effective learning process can be built while reducing data construction costs. In addition, since it is possible to train a feature extraction network suitable for the data type using only normal data, more accurate anomaly detection results can be expected compared to conventional technologies. In addition, since an anomaly detection module considers more diverse information than the conventional technology, more accurate anomaly detection results can be expected than the conventional technology.

The benefits of the present disclosure are not limited to those mentioned above, and other benefits not mentioned herein will be clearly understood by those skilled in the art from the following description.

### [BRIEF DESCRIPTION OF THE DRAWING]

FIG. 1 is a conceptual diagram illustrating an outline of a system implementing a machine learning-based anomaly detection method according to an embodiment of the present disclosure.
FIG. 2 is a diagram illustrating the overall flow of a machine learning-based anomaly detection method according to an embodiment of the present disclosure.
FIG. 3 is a block diagram illustrating a machine learning-based anomaly detection device according to an embodiment of the present disclosure.
FIG. 4 is a conceptual diagram illustrating an embodiment of a method for generating one or more pieces of training data according to an embodiment of the present disclosure.
FIG. 5 is a diagram illustrating an embodiment of a feature extraction network according to an embodiment of the present disclosure.
FIG. 6 is a conceptual diagram illustrating an embodiment of one or more pieces of feature patch data according to an embodiment of the present disclosure.
FIG. 7 is an explanatory diagram illustrating an embodiment of a dimensionality reduction network according to an embodiment of the present disclosure.
FIG. 8 is a conceptual diagram illustrating an embodiment of a method for generating a memory bank according to an embodiment of the present disclosure.
FIG. 9 is a flowchart illustrating an embodiment of a method for determining whether inspection data is normal according to an embodiment of the present disclosure.

### [BEST MODE FOR CARRYING OUT THE INVENTION]

Like reference numerals refer to like elements throughout the specification of the present disclosure. This disclosure does not describe all elements of embodiments, and a general description in the technical field to which the present disclosure pertains or a repetitive description in the embodiments will be omitted. As used herein, the term "unit," "module," "member," or "block" may be implemented as software or hardware. Depending on embodiments, a plurality of "units," "modules," "members," or "blocks" may be implemented as one element, or one "unit," "module," "member," or "block" may include a plurality of elements.

Throughout the specification, when a part is referred to as being "connected" to another part, this includes not only a direct connection but also an indirect connection, wherein the indirect connection includes a connection via a wireless communication network.

Terms such as "first" and "second" may be used to distinguish one component from another, but the components are not restricted by the aforementioned terms.

Hereinafter, the operating principle and embodiments of the present disclosure are described with reference to the attached drawings.

Anomaly detection is defined as a technique for detecting anomaly data that is distinct from normal data. Anomaly detection techniques have made remarkable improvements by using deep learning classification models. A common issue in anomaly detection techniques using deep learning classification models is the exhaustion of anomaly data. Training a deep learning classification model requires a large amount of normal and anomaly data. However, since most of the data that may be obtained naturally is normal data, it is difficult for deep learning classification models to learn anomaly data. This issue may be exacerbated, especially when trying to apply anomaly detection techniques based on deep learning classification models in the industrial field. The first issue may be that anomaly data is scarce due to the nature of the mass production process. Furthermore, anomaly detection in the industrial field may suffer from the issue of anomaly data exhaustion even more severely, as the defects that configure anomaly data are widely distributed, ranging from minor issues such as small scratches to major issues such as missing parts.

To address these issues, various techniques such as conventional data augmentation and self-supervised learning have been studied, and as part of this study, technology that may detect anomaly data by training only with normal data is being continuously studied. In this specification, a device according to an embodiment of the present disclosure includes various devices that may perform computation processing and provide results to a user. For example, the device according to an embodiment of the present disclosure may include all of a computer, a server device, and a portable terminal, or may be in the form of any one thereof.

Herein, the computer may include, for example, a notebook, desktop, laptop, tablet PC, slate PC, etc. equipped with a WEB Browser.

The server device is a server that processes information by communicating with an external device, and may include an application server, a computing server, a database server, a file server, a proxy server, and a web server.

The portable terminal is, for example, a wireless communication device that ensures portability and mobility, and includes all types of handheld-based wireless communication devices such as personal communication system (PCS), global system for mobile communication (GSM), personal digital cellular (PDC), personal handyphone system (PHS), personal digital assistant (PDA), international mobile telecommunication (IMT)-2000, code division multiple access (CDMA)-2000, W-code division multiple access (W-CDMA), a wireless broadband Internet (Wibro) terminal, and a smart phone, and wearable devices such as a watch, ring, bracelet, anklet, necklace, glasses, contact lenses, and a head-mounted-device (HMD).

A machine learning-based anomaly detection device according to an embodiment of the present disclosure may be implemented by including at least one of the aforementioned computer, server device, and portable terminal. For example, the machine learning-based anomaly detection device may be one of a computer, a server device, and a portable terminal, and may also be implemented as a system in which the server device performs a prediction method in the form of a web service and provides the service result to the computer and/or the portable terminal.

In an embodiment of the present disclosure, a reduced feature extraction module means a module that receives at least one piece of input data and generates reduced feature data. The input data of the reduced feature extraction module may be image data, but is not limited thereto. The reduced feature extraction module may be configured of one or more neural networks, and the output data of one neural network may become the input data of another neural network. One or more different networks that configure the reduced feature extraction module may, but need not, have different structures. In addition, one or more different neural networks that configure the reduced feature extraction module may be trained using different data sets and different techniques. The one or more different neural networks that configure the reduced feature extraction module may not be trained simultaneously. The input data of the reduced feature extraction module may be training data or inspection data. The training data may be data for training a portion or all of the neural network that configure the reduced feature extraction module. The input data of the reduced feature extraction module may be a data set including one or more pieces of homogeneous or heterogeneous data.

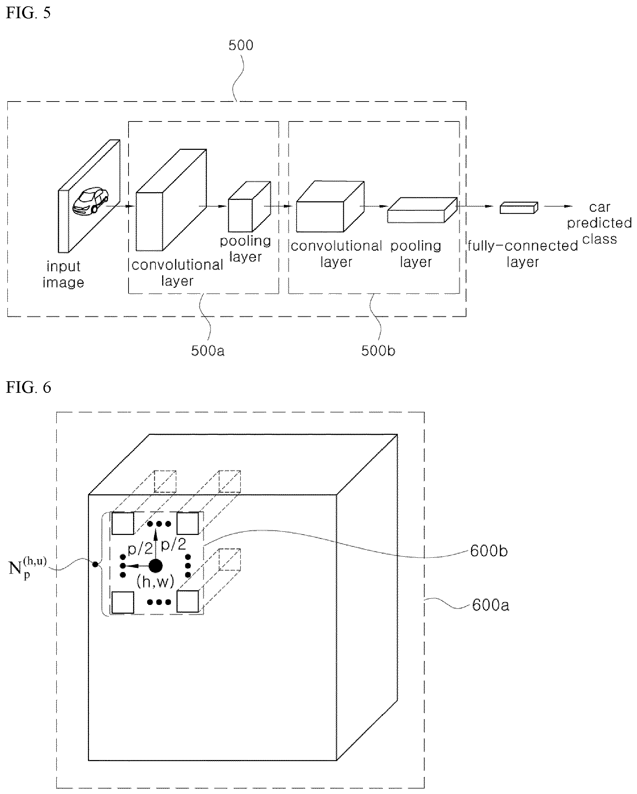

In an embodiment of the present disclosure, a feature extraction network may be one of the networks configuring the reduced feature extraction module. The feature extraction network may refer to a neural network that generates one or more corresponding pieces of feature data from input data. The feature extraction network may be expressed as a structure in which layers that perform pre-designated computations are stacked. In an embodiment of the present disclosure, a pre-designated computation performed in each layer of the feature extraction network may be a convolution operation, and each layer may generate one or more feature maps according to the result of the convolution operation. As will be described later in FIG. 6, the feature map generated based on the result of the convolution operation of each layer may be expressed as a three-dimensional tensor. However, the aforementioned convolution operation of the feature extraction network and the generated data are merely an example of implementing the feature extraction network, and the structure and function of the feature extraction network are not limited thereto.

A dimensionality reduction network according to an embodiment of the present disclosure may be a neural network that receives input feature data and generates reduced feature data corresponding to the input data. The dimensionality reduction network may be one or more neural networks that configure the reduced feature extraction module. The dimensionality reduction network may have a different structure from the feature extraction network, and may be trained on different data sets and using different techniques from the feature extraction network. The dimensionality reduction network may be configured of one or more different neural networks, each of which may have a different loss function and can influence each other. In addition, the dimensionality reduction network may be trained using a combination of loss functions of one or more neural networks configuring the dimensionality reduction network. In particular, the dimensionality reduction network according to an embodiment of the present disclosure may be configured by combining one or more neural networks that measure similarity between two or more pieces of data. In this connection, the dimensionality reduction network may use only some of a plurality of neural networks in a utilization stage after training is completed. The reduced feature data generated by the dimensionality reduction network may have reduced dimensions compared to the input data. For example, when the input data is a 2,048-dimensional vector, the dimensionality reduction network may generate a 1,024-dimensional vector or a 512-dimensional vector corresponding to the 2,048-dimensional vector. The above description is merely an example of the configuration and function of the dimensionality reduction network, and the dimensionality reduction network is not limited to the above description.

Feature patch data according to an embodiment of the present disclosure is data generated by the feature extraction network, and may mean a portion or all of the feature map generated in each layer of the feature extraction network. The feature patch data may vary in size depending on the preset patch size. The feature patch data may be a slice of the feature map generated in each layer of the feature extraction network. This is described in detail later in FIG. 6.

The reduced feature data according to an embodiment of the present disclosure may be data generated by inputting the aforementioned feature patch data into the aforementioned dimensionality reduction network. The reduced feature data may be data that minimizes the loss of information contained in the aforementioned feature patch data. In particular, the reduced feature data may be constructed to include location information from the original input data of the feature patch data. The reduced feature data may have a different format from the feature patch data described above. The above description is merely an example of the implementation of the reduced feature data, and the interpretation of the reduced feature data should not be limited to this content.

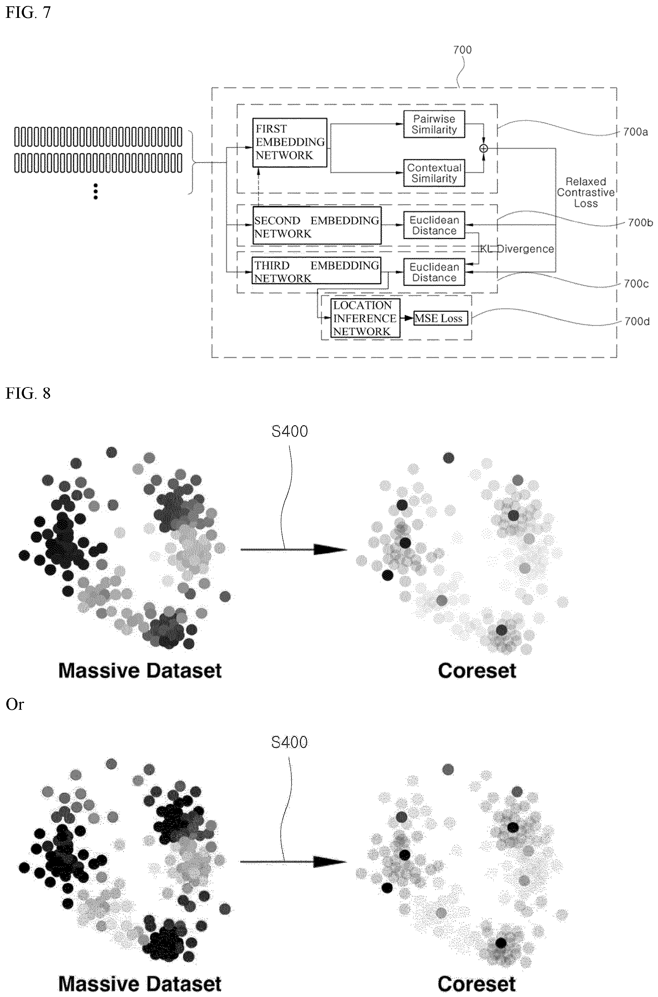

A memory bank of an embodiment of the present disclosure may be a set of one or more pieces of reduced feature data. Once constructed, the memory bank may be used to detect anomalies in the inspection data. In an embodiment, the anomaly detection device according to an embodiment of the present disclosure may determine whether the inspection data is an anomaly by comparing the reduced feature data of the inspection data with the reduced feature data previously stored in the memory bank. In an embodiment of the present disclosure, the reduced feature data stored in the memory bank may include reduced feature data generated during training of the reduced feature extraction module. Alternatively, in an embodiment of the present disclosure, the memory bank may include only the reduced feature data for normal data. In another embodiment, the memory bank may include all pieces of the reduced feature data generated during training of the reduced feature extraction module. In another embodiment, the anomaly detection device according to an embodiment of the present disclosure may generate a reduced feature data subset, which is a subset that may best explain the entire reduced feature data generated during training, and store the same in the memory bank for computational efficiency and reduction of inference time. This will be described in detail later in FIG. 8.

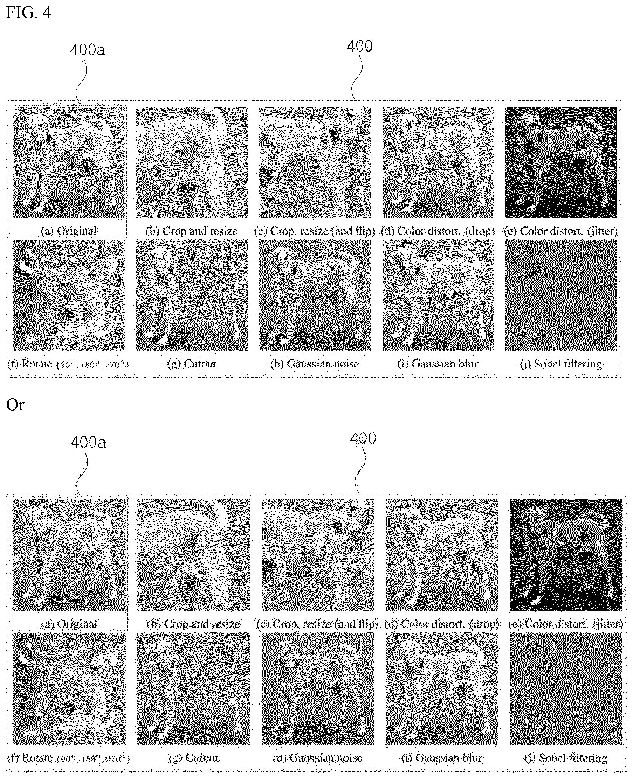

The training data and the inspection data according to an embodiment of the present disclosure are input data for the reduced feature extraction module, and may be used to train the reduced feature extraction module or to check for anomalies in the inspection data using the reduced feature extraction module. In an embodiment of the present disclosure, the terms "training data" or "inspection data" may mean a training data set or an inspection data set, which are sets of one or more pieces of training data or inspection data. In an embodiment of the present disclosure, each of one or more neural networks configuring the reduced feature extraction module may not be trained simultaneously. In other words, the feature extraction network and the dimensionality reduction network may be trained using different training data at different times. The training data according to an embodiment of the present disclosure may include only normal data, or may include modified data or dummy data generated using a data augmentation technique. This will be described in detail later in FIG. 4.

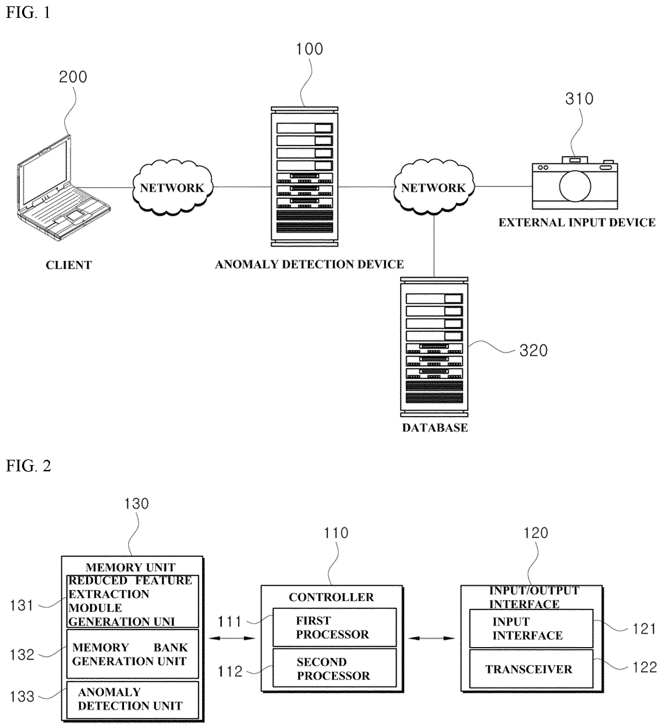

FIG. 1 is a conceptual diagram illustrating an outline of a system implementing a machine learning-based anomaly detection method according to an embodiment of the present disclosure.

In an embodiment, an anomaly detection device 100 according to an embodiment of the present disclosure may be implemented with hardware and software for performing an anomaly detection method. In an embodiment of the present disclosure, the expression of training the anomaly detection device 100 may mean repeatedly inputting data into the anomaly detection device 100 so that the hardware or software inside the anomaly detection device 100 is changed from an initial state to reach a preset level by a pre-designed method. In another embodiment, the anomaly detection device 100 according to an embodiment of the present disclosure may receive a request from a client 200 and be trained using data received from an external input device 310 or data previously stored in a database 320 according to the received request. In another embodiment, the anomaly detection device 100 according to an embodiment of the present disclosure may receive a request from the client 200, detect an anomaly in data input from the external input device 310 or data stored in the database 320 according to the received request, store the result again in the database 320, and transmit the same to the client 200.

The anomaly detection device 100 according to an embodiment of the present disclosure may be a device capable of discriminating whether input data is normal or anomalistic. In an embodiment, the anomaly detection device 100 may perform a portion or all of the anomaly detection method according to an embodiment of the present disclosure. In another embodiment, the anomaly detection device 100 may include, as a portion or all, dedicated hardware for performing the anomaly detection method according to an embodiment of the present disclosure. In yet another embodiment, the anomaly detection device 100 may be a general-purpose computing device including a commercial server computer, and may execute software for performing the anomaly detection method according to an embodiment of the present disclosure. The aforementioned content is merely an example of the physical form of the anomality detection device 100, and the method for implementing the anomaly detection device 100 is not limited thereto.

In an embodiment of the present disclosure, the anomaly detection device 100 may perform an anomality detection task according to a request from the client 200. In an embodiment, the client 200 according to an embodiment of the present disclosure may be a device that may transmit a request to perform an anomaly detection task to the anomaly detection device 100 using the illustrated network, and receive the result of the performance and provide the same to a user. Specifically, the client 200 may include a general-purpose computing device such as a desktop or laptop, a mobile device such as a smartphone or tablet, and may be a dedicated device manufactured to perform an anomaly detection method according to an embodiment of the present disclosure.

In an embodiment of the present disclosure, the external input device 310 may be a module that converts information outside a system into a format that may be transmitted to the anomaly detection device 100, and specifically may include an image sensor module including a camera module, an audio sensor module, or an infrared sensor module.

The database 320 according to an embodiment of the present disclosure may store data related to the anomaly detection device 100. In an embodiment, the database 320 may include training data for training the anomaly detection device 100, and inspection data for detecting anomalies using the anomaly detection device 100. In another embodiment, the database 320 may store the results of anomaly detection performed by the anomaly detection device 100. The database 320 may receive data from modules inside and outside the system, including the anomaly detection device 100, the client 200, and the external input device 310, using a network, and store the data. In yet another embodiment, the database 320 may store one or more software modules that may be used by the anomaly detection device 100.

FIG. 2 is a diagram illustrating the overall flow of a machine learning-based anomaly detection method according to an embodiment of the present disclosure.

The input/output interface 300 according to an embodiment of the present disclosure may include an input interface 121 and a transceiver 122. Among the above components, the transceiver may include one or more components that enable communication with an external device, and may include, for example, at least one of a wired communication module, a wireless communication module, or a short-range communication module.

The wired communication module may include various wired communication modules such as a local area network (LAN) module, a wide area network (WAN) module, and a value-added network (VAN) module, as well as various cable communication modules such as a Universal Serial Bus (USB) module, a High-Definition Multimedia Interface (HDMI) module, a digital visual interface (DVI) module, a Recommended Standard 232 (RS-232), a power line communication module, and a plain old telephone service (POTS) module, and a processor or/and a memory for driving the same.

The wireless communication module may include, in addition to a Wi-Fi module and a WiBro module, wireless communication modules which support various wireless communication methods, such as a GSM module, a CDMA module, a W-CDMA module, a universal mobile telecommunications system (UMTS) module, a time-division multiple access (TDMA) module, a long-term evolution (LTE) module, 4G, 5G, and 6G, and a processor or/and a memory for driving the same.

The wireless communication module may include a wireless communication interface including an antenna for transmitting a signal and a transmitter. In addition, the wireless communication module may further include a conversion module configured to modulate the digital control signal output from the controller into an analog type wireless signal through the wireless communication interface under the control of the controller.

The wireless communication module may include a wireless communication interface including an antenna for receiving a signal and a receiver. In addition, the wireless communication module may further include a conversion module for demodulating the analog type wireless signal received through the wireless communication interface into a digital control signal.

The short-range communication module is for short-range communication and may support short-range communication using at least one of Bluetooth (Bluetooth^{™} RFID (Radio Frequency Identification)), infrared data association (IrDA), ultra wideband (UWB), Zigbee, near field communication (NFC), wireless-fidelity (Wi-Fi), Wi-Fi Direct, or Wireless Universal Serial Bus (USB) technology.

The input interface is to input image information (or signal), audio information (or signal), data, or information input from a user, and may include at least one of at least one camera, at least one microphone, or a user input interface. The voice data or image data collected by the input interface may be analyzed and processed through a user control command.

The camera processes an image frame, such as a still image or a moving image, obtained by an image sensor in a photographing mode. The processed image frame may be displayed on a display unit (or a screen of the anomaly detection device or the client of an embodiment of the present disclosure) or stored in a memory.

When there are a plurality of cameras, these cameras may be disposed to form a matrix structure. A plurality of pieces of image information having various angles or foci may be input through the cameras forming the matrix structure. In addition, the cameras may be disposed in a stereo structure to acquire left and right images for implementing a three-dimensional stereoscopic image.

An interface unit (not shown) serves as a passage to various types of external devices connected to the device. This interface unit may include at least one among a wired/wireless headset port, an external charger port, a wired/wireless data port, a memory card port, a port for connecting a device having a identification module (SIM), an audio input/output (I/O) port, a video I/O port, and an earphone port. The device may perform proper control related to the external device connected to the interface unit.

A memory unit 130 may store data supporting various functions of the device and programs for the operation of the controller, may store input/output data (for example, music files, still images, moving images, etc.), and may store a number of application programs (or applications) driven on the device, data for the operation of the device, and instructions. At least some of these application programs may be downloaded from external servers via wireless communication.

This memory may include at least one type of storage medium among flash memory type, hard disk type, solid state disk (SSD) type, silicon disk drive (SDD) type, multimedia card micro type, card-type memory (for example, SD or XD memory), random access memory (RAM), static random access memory (SRAM), read-only memory (ROM), electrically erasable programmable read-only memory (EEPROM), programmable read-only memory (PROM), magnetic memory, magnetic disk, or optical disk. In addition, the memory may be a database separate from the device, but connected by wire or wirelessly.

The controller may be implemented using a memory configured to store data for algorithms to control operation of components of the device or programs constructed from algorithms, and at least one processor configured to perform the aforementioned operation by using data stored in the memory. In this connection, the memory and the processor may be implemented using separate chips. Alternatively, the memory and the processor may be integrated into a single chip. In an embodiment of the present disclosure, the controller may include one or more processors, such as a first processor 111 and a second processor 112. The first processor 111 and the second processor 112 may be implemented using different chips. The first processor 111 and the second processor 112 may be different types of processors. For example, the first processor 111 may be implemented as a CPU and the second processor 112 may be implemented as a GPU, without being limited thereto.

In addition, the controller may control any one or a plurality of the components in combination described above to implement various embodiments of the present disclosure described in FIGS. 2 to 9 below on the device.

At least one component may be added or deleted corresponding to the performance of the components illustrated in FIG. 2. In addition, it will be readily apparent to those skilled in the art that the relative positions of the components may be changed in response to the performance or structure of a system.

Each of the components illustrated in FIG. 2 denotes software and/or hardware components such as a field programmable gate array (FPGA) and an application specific integrated circuit (ASIC).

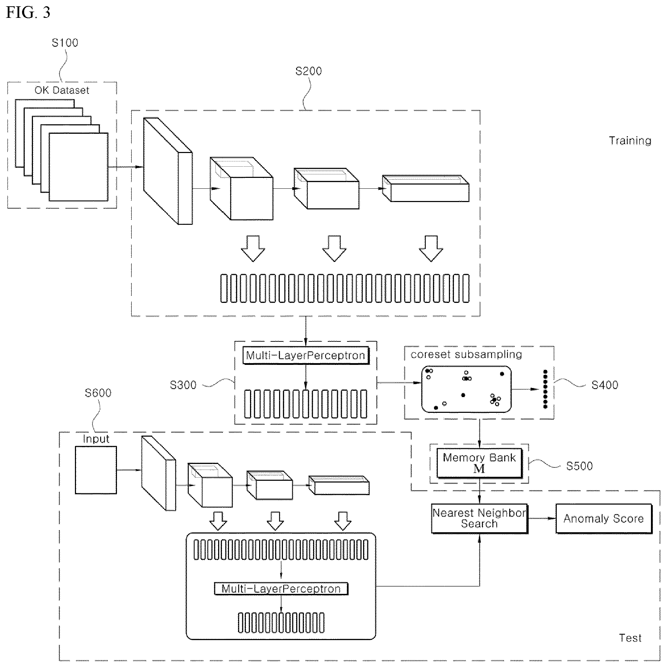

FIG. 3 is a block diagram illustrating a machine learning-based anomaly detection device according to an embodiment of the present disclosure. In an embodiment, the anomaly detection method according to an embodiment of the present disclosure may be broadly divided into two portions. One portion may include a portion for generating a reduced feature extraction module and generating a memory bank based on reduced feature data generated from the reduced feature extraction module (S100 to S400). Another portion may include determining whether the inspection data is normal using the generated reduced feature extraction module and memory bank (S500).

The generation of the reduced feature extraction module according to the anomaly detection method may start with constructing a training data set (S 100). In an embodiment, the training data set may include one or more pieces of homogeneous type data. For example, the training data set may include one or more pieces of image data, audio data, and text data. There may be cases where the training data set includes heterogeneous data. However, for convenience of explanation, hereinafter, it is assumed that the training data set includes one or more pieces of data of the same type. In an embodiment, the construction of the training data set (S100) may be implemented by including one or more pieces of normal data in the training data set. In an embodiment, the training data set may be constructed from only normal data. Furthermore, in another embodiment, the construction of the training data set (S100) may be implemented by including one or more pieces of normal data and data obtained by applying some modifications to such normal data in the training data set. Specifically, some of the modifications applied to normal data may be to generate anomality samples from the normal data, in other words, to generate negative samples. In yet another embodiment, the construction of the training data set (S100) may be implemented by including one or more pieces of normal data and dummy data unrelated to the normal data in the training data set.

It is not necessary to label the data included in the training data set. In other words, each piece of training data may be unlabeled. When the training data is not labeled, the feature extraction network and the dimensionality reduction network may be trained in an unsupervised learning or self-supervised learning manner. The construction of the training data set will be described in detail in FIG. 4. As described above, when the training data set is constructed, even when anomaly data is not secured, data for training the feature extraction network may be secured, so the difficulty of acquiring training data may be resolved. Furthermore, in an embodiment of the present disclosure, it is possible not to label training data, which may reduce the cost required for data labeling.

The anomaly detection method according to an embodiment of the present disclosure may train the feature extraction network to generate the reduced feature extraction module (S200). In an embodiment of the present disclosure, as described above, the feature extraction network may be one of the neural networks configuring the reduced feature extraction module. In an embodiment, the feature extraction network may extract features of one or more pieces of training data input in the stage (S100) to generate feature patch data. The feature extraction network may take the form of one or more repeated layers that perform preset computations. In an embodiment, one or more layers configuring the feature extraction network may include a convolutional layer that performs a convolution operation. In some embodiments of the present disclosure, the feature patch data described above may be a combination of one or more feature maps extracted from one or more layers of the feature extraction network. This will be described in detail later in FIG. 6.

There are various methods that may be used to train the feature extraction network, such as supervised learning, unsupervised learning, and self-supervised learning. In an embodiment, the feature extraction network may be trained to find similarities between one or more pieces of input data (in other words, training data or inspection data). For example, the anomaly detection device 100 according to an embodiment of the present disclosure may perform training of the feature extraction network by determining the similarity between one or more pieces of output of the feature extraction network for a plurality of pieces of training data.

In an embodiment of the present disclosure, the similarity may mean a norm that may measure the similarity between two or more objects, and may be expressed by measuring, for example, the distance in space between two or more objects (for example, vectors). Specifically, various metric learning methods may be mobilized to train the feature extraction network, and methods such as contrastive learning may be used. Specifically, this contrastive learning may be trained so that different pairs of data that have been modified by applying a weak modification so as not to go beyond the range of normal data are classified as the same class and so that the distance between the outputs becomes closer, and so that the distance between the outputs of anomaly data that is modified from normal data and normal data becomes farther away. In addition, the feature extraction network may be additionally trained to infer a method of modification applied to anomaly samples of the training data set. For example, the output data of the feature extraction network may be trained to discriminate whether the modification applied to the training data was a cut-out, a rotation, or the addition of noise.

As described above, when the feature extraction network is trained, it is possible to train the feature extraction network appropriate for a task, compared to conventional techniques, while preventing the feature extraction network from overfitting to data. In addition, it does not require labeling of training data, which reduces the time and cost required to build a data set.

The dimensionality reduction network may be trained using feature patch data generated through the feature extraction network of an embodiment of the present disclosure. In an embodiment, the feature patch data for training the dimensionality reduction network may be generated from normal data only. The dimensionality reduction network may reduce the dimension of input feature patch data to generate reduced patch data (S300). The reduced feature data may be data that represents the feature patch data well. In an embodiment, the dimensionality reduction network may have one or more sub-neural networks. Specifically, the dimensionality reduction network may be trained using one or more sub-neural networks that determine the similarity between two or more pieces of input data (in other words, a feature patch network). Furthermore, the dimensionality reduction network may be trained to infer the location of input feature patch data on the training data. When the dimensionality reduction network is trained to determine the similarity between two or more pieces of input data, it may minimize the loss of information contained in the feature patch data. This will be described in detail later in FIG. 7.

The anomaly detection method according to an embodiment of the present disclosure may construct a memory bank using a reduced feature extraction module including the feature extraction network and the dimensionality reduction network after the training of the feature extraction network (S200) and the training of the dimensionality reduction network are completed (S500). To construct the memory bank, the reduced feature extraction module may be used to generate reduced feature data of one or more pieces of data, and the generated reduced feature data may be included in the memory bank. In an embodiment, the reduced feature data used to generate the memory bank may be using only normal data. In an embodiment, only a portion of the reduced feature data generated to generate the memory bank may be selected (S400). In other words, one or more subsets that may well explain the entire set of reduced feature data generated using the reduced feature extraction module may be selected and stored in the memory bank. This will be described in detail later in FIG. 8.

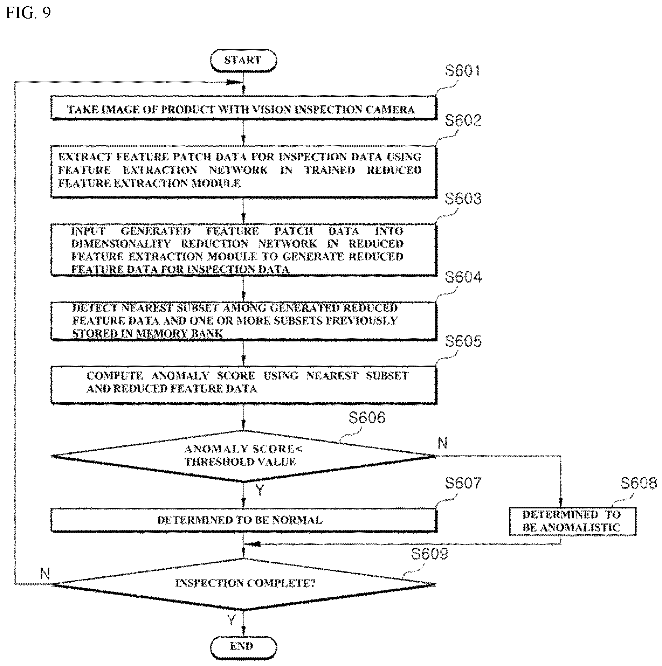

The anomaly detection method according to an embodiment of the present disclosure may include determining whether inspection data is normal using the generated reduced feature extraction module and memory bank (S600). Specifically, the anomaly detection method according to an embodiment of the present disclosure may extract reduced feature data of the inspection data using a reduced feature extraction module whose training has been completed, and select a subset of reduced feature data nearest to the reduced features of the inspection data from the memory bank. Thereafter, it is possible to detect whether the input data is anomalistic by computing the anomaly score between the nearest reduced feature data subset and the reduced feature data of the input data. This will be described in detail later in FIG. 9.

Anomaly data may be detected using only normal data. Accordingly, an effective learning process may be constructed while reducing data construction costs. In addition, since it is possible to train a feature extraction network suitable for the data type using only normal data, more accurate anomaly detection results may be expected compared to conventional technologies. In addition, since the anomaly detection module considers more diverse information than the conventional technology, more accurate anomaly detection results may be expected than the conventional technology.

FIG. 4 is a conceptual diagram illustrating an embodiment of a method for generating one or more pieces of training data according to an embodiment of the present disclosure. In an embodiment of the present disclosure, a training data set 400 may include only one or more pieces of normal data 400a, or may include the normal data 400a and its modified data as training data. In an embodiment of the present disclosure, only the normal data 400a is indicated as normal data for convenience, but whether any data is normal data should be determined based on the degree of modification, and therefore should not be limited to the disclosure of FIG. 4.

In an embodiment, the training data may be generated by performing a preset manipulation on the one or more pieces of normal data 400a. For example, the training data may include normal data, data that has been modified from the normal data, or dummy data. For example, the modification applied to the normal data may be a modification that generates anomaly data. However, an application of a modification to normal data does not necessarily result in the generation of anomaly data. In an embodiment of the present disclosure, even when the data is modified from normal data, it may still be normal data. Furthermore, an embodiment of the present disclosure assumes both supervised learning and unsupervised learning cases, and herein, the anomaly data may refer to data that has been modified and is labeled as anomaly data, or data that may be distinguished as a subset different from normal data as a result of training an anomaly detection module. As a specific example, the anomaly data may refer to modified data that belongs to a different cluster from normal data as a result of unsupervised learning.

In addition, in an embodiment of the present disclosure, dummy data may be data unrelated to normal data. Referring to FIG. 4, when normal data is a puppy image 400a, dummy data may be cat data, turtle data, or box data. In an embodiment of the present disclosure, the feature extraction network or the dimensionality reduction network may be formed based on a training data set configured by adding one or more pieces pf dummy data as described above to one or more normal data sets. Specifically, the training of the feature extraction network utilizing the dummy data according to an embodiment of the present disclosure may be trained as an issue of classifying a good data set as one class and dummy data as another class. In an embodiment, the training of the feature extraction network utilizing the dummy data may utilize contrastive learning. In this connection, images belonging to the same class may be classified as a positive pair, and image pairs belonging to different classes may be classified as a negative pair, and trained using the contrastive loss function. In yet another embodiment, the feature extraction network trained utilizing a dummy data set may be trained to infer which class of dummy data was added by adding a classification layer. Referring to FIG. 4, in an embodiment of the present disclosure, methods of deformation for creating anomaly data may include crop and resize or cut out, but as described above, the anomaly data should not be limited to meaning modified data generated by the crop and resize or cut out methods.

FIG. 5 is a diagram illustrating an embodiment of a feature extraction network 500 according to an embodiment of the present disclosure. The feature extraction network 500 according to an embodiment of the present disclosure may include one or more feature map generation layers 500a and 500b. The one or more feature map generation layers may include a convolution layer that performs a convolution operation and a pooling layer that performs a pooling operation on the performance result of the convolution operation. In an embodiment, the feature map generation layer 500a and the feature map generation layer 500b may have different parameters. Accordingly, each feature map generated in the feature map generation layer 500a and the feature map generation layer 500b may have different resolutions.

Each of the feature map generation layers 500a and 500b of the feature extraction network 500 according to an embodiment of the present disclosure may generate at least one feature map, and preferably may generate one feature map each. In addition, in the anomaly detection method according to an embodiment of the present disclosure, feature patch data may be generated using feature map data of each of the feature map generation layers 500a and 500b included in the feature extraction network 500. In an embodiment, the feature patch data may be configured of the feature map data of one feature map generation layer. In another embodiment, the feature patch data may be generated by combining the feature map data from two or more feature map generation layers. Specifically, a combination of the feature map data may be accomplished as a concatenation of the feature map data. In some embodiments of the present disclosure, the feature map data for generating the feature patch data may include a feature map generated from a high abstraction layer (a task of summarizing key contents or functions in a large amount of data or complex materials), in other words, a high abstraction feature map. The high abstraction layer may refer to a layer that generates a feature map generated from the relevant layer that includes core information contained in the data rather than specific features of the image itself. In other words, the high abstraction layer may refer to a layer in which the feature map generated from the relevant layer includes little information on the specific features of the image itself, or a layer in which the feature map includes more core information of the data than the specific features of the image itself. In some embodiments, the high abstraction layer may refer to a feature map generation layer with four or more layers. In yet another embodiment, the feature map data for generating the feature patch data may include low-abstraction feature maps generated from one or more low-abstraction feature map generation layers as well as feature map data of a high-abstraction feature map generation layer. Furthermore, the feature map data for generating the feature patch data may include feature maps of all feature map generation layers.

In the related art, when the feature extraction network is trained, data appropriate for the task was not used, but rather a general feature extraction network such as ImageNet was used. Accordingly, there was an issue that the high-abstraction feature map data might not be utilized to address the task because the high-abstraction feature map extracted features biased toward the ImageNet rather than extracting features suitable for the task. Considering that in general, in anomaly detection issues, data in the high abstraction layer plays an important role in performing anomaly detection in the entire data unit, it is expected that performance in the anomaly detection issue will be improved by utilizing the high abstraction feature map in an embodiment of the present disclosure.

FIG. 6 is a conceptual diagram illustrating an embodiment of one or more pieces of feature patch data according to an embodiment of the present disclosure. In an embodiment of the present disclosure, feature map connection data 600a may be data that concatenates one or more feature maps generated from one or more feature map generation layers. In addition, in an embodiment of the present disclosure, feature patch data 600b may be a feature slice including feature values of a specific point of the feature map connection data 600a and its surroundings, and may be a portion of the feature map connection data 600a. The feature map connection data 600a and the feature patch data 600b have an inclusive relationship, and the description of the feature patch data described below may be equally applied to the feature map connection data 600a. Hence, for convenience of explanation, the description below is based on the feature patch data 600b.

In an embodiment of the present disclosure, the feature map connection data 600a and the feature patch data 600 may be expressed as a three-dimensional tensor. For example, the feature patch data 600 may be generated from one or more feature maps generated from one feature map generation layer. In this connection, the feature patch data 600 may be a three-dimensional tensor having the number of channels of the feature map as the width, height and depth of the feature map. In another example, when the feature patch data 600 is generated from feature maps of two or more feature map generation layers, the depth of the feature patch data may be multiplied by the number of feature map generation layers. In this connection, the width and height values of feature maps generated from different feature map generation layers may be different. The anomaly detection device according to an embodiment of the present disclosure may adjust the resolution between feature maps of different generation layers to match by enlarging a relatively small feature map or reducing a relatively large feature map using interpolation. When the feature patch data is generated using feature map data from two or more different layers, the dimensionality reduction network may learn high-level abstraction features from low-level abstraction features at once, which may increase the learning effect.

FIG. 7 is an explanatory diagram illustrating an embodiment of a dimensionality reduction network 700 according to an embodiment of the present disclosure. The dimensionality reduction network 700 according to an embodiment of the present disclosure may be trained by training one or more sub-networks. As described above, the feature patch data for training the dimensionality reduction network 700 may include only data generated from normal data. In an embodiment, the dimensionality reduction network may be trained holistically by training one or more of a first embedding network 700a, a second embedding network 700b, a third embedding network 700c, and a location inference network 700d, respectively.

In an embodiment, supervised learning, unsupervised learning, and self-supervised learning may be used to train the dimensionality reduction network 700. In particular, when one or more sub-networks of the dimensionality reduction network 700 are trained, it may be trained to learn similarities between two or more pieces of data, and specifically, various metric learning may be used. In an embodiment, the first embedding network 700a, the second embedding network 700b, and the third embedding network 700c may learn similarity between two or more pies of input data. In some embodiments of the present disclosure, the first embedding network 700a and the second embedding network 700b may have the same structure, and the training result of the second embedding network 700b or a change in parameters according to the training may affect the first embedding network 700a. In particular, in an embodiment of the present disclosure, the first embedding network 700a and the second embedding network 700b or the third embedding network 700c may generate reduced feature data by reducing the dimension of feature patch data and embedding the same. In order not to lose generality, data embedded by the first embedding network 700a, the second embedding network 700b, or the third embedding network 700c is expressed as embedding data or an embedding vector, and such embedding data may mean reduced feature data with a reduced dimension compared to the feature patch data input by the first embedding network 700a, the second embedding network 700b, or the third embedding network 700c.

As a specific example, the first embedding network 700a may compute the similarity between the embeddings of two or more pieces of input data by combining pairwise similarity and contextual similarity. The pairwise similarity considers the similarity between two embedding vectors within an embedding space, while the context similarity considers how much the adjacent neighbors of two embedding vectors overlap. In a specific example, the combination of pairwise similarity and contextual similarity may mean the average between the two similarities. It is known that the pairwise similarity may produce inaccurate results in unsupervised learning, so in addition to considering the similarity between two embedding vectors through the pairwise similarity, similarity learning through the pairwise similarity may be supplemented by considering how much the neighboring vectors of two embedding vectors overlap.

In an embodiment according to the present disclosure, the second embedding network 700b and the third embedding network 700c may derive the similarity between two embedding vectors using the Euclidean distance. In an embodiment, the second embedding network 700b and the third embedding network 700c may compute a relaxed contrastive loss, which configures a portion of the loss function of the dimensionality reduction network 700, based on the derived Euclidean distance and the similarity value generated from the first embedding network 700a, respectively. The relaxed contrast loss may serve to train the dimensionality reduction network by making the distance between two embedding vectors embedded by the second embedding network 700b and the third embedding network 700c closer when the two embedding vectors are similar, and making the distance between the two embedding vectors farther when the two embedding vectors are not similar, but not making the distance farther than a predetermined distance even when the two embedding vectors are not similar.

In yet another embodiment, based on the Euclidean distance data derived from the second embedding network 700b and the Euclidean distance data derived from the third embedding network 700c, the Kullback-Leibler divergence between the second embedding network 700b and the third embedding network 700c may be used as a portion of the loss function for training the dimensionality reduction network 700. The Kullback-Leibler divergence represents the difference when the third embedding network 700c is used instead of the second embedding network 700b to represent the input feature patch data, and the third embedding network 700c may play a role in training to embed reduced feature data similarly to the second embedding network 700b.

In addition, the dimensionality reduction network 700 may further include the location inference network 700d. In some embodiments of the present disclosure, the location inference network 700d may be trained to receive embedding data of feature patch data as input and infer a location in the feature patch data or input image data of the embedding data (in other words, data input to the feature extraction network) or in a feature map. In an embodiment, the location inference network 700d may be trained to receive embedding data of the third embedding network 700c as input and infer the location of the feature patch data in the input image data or feature map. In another embodiment, the location inference network 700d may utilize embedding data of the first embedding network 700a or the second embedding network 700b. In this connection, a loss function that measures a mean squared error (MSE) or the distance between the location of the reduced patch data inferred by the location inference network 700d and the actual location of the reduced patch data and converts the same into a negative log scale by normalizing the same with a Gaussian kernel may be used as a portion or all of the loss function for training the dimensionality reduction network 700. By using this as a loss function, the dimensionality reduction network 700 may be trained to preserve location information in the feature map of the reduced patch data when the reduced patch data is embedded into reduced feature data. In an embodiment, the loss function for training the dimensionality reduction network 700 may be configured by using a portion or all of the relaxed contrastive loss, Kullback-Leibler divergence and MSE error or the negative log-scale conversion loss normalized with a Gaussian kernel.

In general, when the pooling technique is used to reduce the dimension of input data, there is a risk of losing various pieces of information contained in the input data. As in an embodiment of the present disclosure, by training input data utilizing a metric learning technique while simultaneously reducing the dimension of the data by adding the issue of inferring the location of the input data to the dimensionality reduction network, the loss of location information of the input data may be minimized. In an anomaly detection issue, when location information is included in the embedding data of input data as in an embodiment of the present disclosure, inference about the location where an anomaly occurred may be made more effectively. In particular, when the location inference network 700d is utilized as described above, the dimensionality reduction network 700 may be trained so that the embedding data for the feature patch data of the first embedding network 700a and the second embedding network 700b or the embedding data for the feature patch data of the third embedding network 700c imply the location information in the input data feature map of the input patch data.

In an embodiment, once the training of the dimensionality reduction network 700 is completed, only a portion of the dimensionality reduction network may be utilized when the memory bank is generated or a determination of whether the inspection data is anomalistic is inferred. In an embodiment, after the training of the dimensionality reduction network 700 is completed, only the third embedding network 700c may be used to generate (embed) reduced feature data. In other words, in this connection, the dimensionality reduction network 700 may generate the reduced feature data from feature patch data using only the third embedding network 700c. Accordingly, it is expected that the computational amount of the dimensionality reduction network 700 will be reduced and the computational speed will be improved.

FIG. 8 is a conceptual diagram illustrating an embodiment of a method for generating a memory bank according to an embodiment of the present disclosure. In an embodiment of the present disclosure, the memory bank may mean a data set including one or more pieces of feature patch data or one or more pieces of reduced feature data. In an embodiment, the reduced feature data stored in the memory bank may include only data derived from normal data.

In an embodiment, the memory bank may include one or more pieces of reduced feature data generated from the dimensionality reduction network. In another embodiment, the memory bank may classify some pieces of the reduced feature data generated from the dimensionality reduction network into one or more subsets and include the same in the memory bank. Herein, the one or more pieces of reduced feature data classified into one or more subsets may well explain the entire reduced feature data generated from the dimensionality reduction network. Specifically, being able to explain the entire reduced feature data well may mean that the distribution of the reduced feature data classified into one or more subsets is similar to that of the entire reduced feature data, or that the accuracy of an anomaly detection task using inspection data is not significantly different when the memory bank is configured with one or more pieces of subset data compared to when the memory bank is configured with the entire reduced feature data. Specifically, the classification of a portion of the reduced feature data into one or more subsets may be done by using a minimax algorithm to select the reduced feature data to be included in each subset.

As such, when only a portion of the entire reduced feature data is utilized in the memory bank, the amount of computation required for anomaly detection using inspection data may be greatly reduced, which has the advantage of greatly shortening the inference time.

FIG. 9 is a flowchart illustrating an embodiment of a method for determining whether inspection data is normal according to an embodiment of the present disclosure. In an embodiment of the present disclosure, the determination of whether the inspection data is normal using the generated reduced feature extraction module may be configured to: take an image of a product with a vision inspection camera (S601); extract feature patch data for the inspection data using a feature extraction network in a trained reduced feature extraction module (S602); input the generated feature patch data into a dimensionality reduction network in the reduced feature extraction module to generate reduced feature data for the inspection data (S603); detect a nearest subset among the generated reduced feature data and one or more subsets previously stored in a memory bank (S604); compute an anomaly score using the nearest subset and the reduced feature data (S605); and determine whether the anomaly score is within a preset criterion (in other words, a threshold value) (S606), thereby detecting whether the inspection data is anomalistic (S606 and S607). In an embodiment, the detection of the reduced feature data and the nearest subset among the one or more subsets may be performed by a k-nearest neighbor (k-NN) algorithm. Once the nearest subset is extracted, the maximum distance between the reduced feature data included in the subset and the reduced feature data of the inspection data may be determined as the anomaly score for anomaly detection. Since defects typically occur in a portion of a product rather than in the entire product, it may be more effective to measure defects based on maximum distance. In another embodiment, when an anomaly score is determined, the maximum distance between the reduced feature data included in the subset and the reduced feature data of the inspection data may be normalized using distance information with the surrounding subsets. Normalizing the anomaly score may compensate for differences in distances between subsets, allowing for more accurate measurement of the anomaly score.

The disclosed embodiments may be implemented in the form of a recording medium storing instructions executable by a computer. The instructions may be stored in the form of program code, which, when executed by a processor, may generate program modules to perform the operations of the disclosed embodiments. The recording medium may be implemented as a computer-readable recording medium.

Computer-readable recording media include all types of recording media that store instructions that may be deciphered by a computer. Examples thereof include a read only memory (ROM), a random access memory (RAM), a magnetic tape, a magnetic disk, a flash memory, and an optical data storage device.

As described above, the disclosed embodiments have been described with reference to the attached drawings. Those skilled in the art will appreciate that the present disclosure may be practiced in other forms than the disclosed embodiments without changing the technical spirit or essential features of the present disclosure. The disclosed embodiments are illustrative and should not be construed as limiting.

### [INDUSTRIAL APPLICABILITY]

The present disclosure provides a method for detecting an anomaly and normality in a manufacturing process, wherein a computing device including an anomaly detection module trains an anomaly detection module, and thus has industrial applicability.

## Claims

1. A computing device for performing anomaly detection, the device comprising:
a memory comprising at least one memory bank that is a logical area; and
a processor configured to train a neural network by using at least one function module, generating a reduced feature extraction module, generating the memory bank based on reduced feature data generated from the reduced feature extraction module, and determining whether inspection data is normal by using the generated reduced feature extraction module and the memory bank,
wherein the processor performs an operation of generating the reduced feature extraction module by:
training a feature extraction network using one or more pieces of first training data;
generating one or more pieces of feature patch data from one or more pieces of second training data using the trained feature extraction network;
training a dimensionality reduction network using the one or more pieces of feature patch data; and
generating the reduced feature data from the feature patch data using the trained dimensionality reduction network.

2. The computing device of claim 1, wherein the feature extraction network is trained to determine a distance or similarity between two or more pieces of the inspection data.

3. The computing device of claim 2, wherein the one or more pieces of the first training data comprise modified data or dummy data generated based on one or more pieces of normal data.

4. The computing device of claim 3, wherein the feature extraction network is additionally trained to infer a method in which the modified data is modified or a class of the dummy data is determined.

5. The computing device of claim 1, wherein:
the feature extraction network comprises one or more feature map generation layers;
the one or more feature map generation layers generate at least one feature map;
the feature patch data is generated from the at least one feature map; and
the at least one feature map comprises at least one highly abstracted feature map.

6. The computing device of claim 5, wherein the at least one feature map comprises the feature map in all of the feature map generation layers of the feature extraction network.

7. The computing device of claim 5, wherein the one or more pieces of second training data comprise only normal data.

8. The computing device of claim 1, wherein the dimensionality reduction network is trained by learning a distance or similarity between the one or more pieces of feature patch data.

9. The computing device of claim 8, wherein the dimensionality reduction network is additionally trained to infer location information in a feature map generated by the feature extraction network or location information in the second training data of the feature patch data based on the reduced feature data.

10. The computing device of claim 8, wherein the dimensionality reduction network allows the reduced feature data to imply location information in a feature map generated by the feature extraction network or location information in the second training data of the feature patch data.

11. The computing device of claim 1, wherein generating the memory bank from the reduced feature data comprises classifying one or more pieces of the reduced feature data into one or more subsets.

12. The computing device of claim 11, wherein the memory bank comprises only the reduced feature data for normal data.

13. The computing device of claim 1, wherein the determination of whether the inspection data is normal by using the generated reduced feature extraction module comprises:
generating the reduced feature data for the inspection data by using the reduced feature extraction module;
identifying a nearest subset of the reduced feature data for the inspection data among one or more subsets included in the memory bank by using the reduced feature data;
computing an anomaly score by using the nearest subset and the reduced feature data; and
detecting whether the inspection data is anomalistic based on the anomaly score.

14. A machine learning-based anomaly detection method performed by a computing device, the method comprising:
generating a reduced feature extraction module;
generating a memory bank based on reduced feature data generated from the reduced feature extraction module; and
determining whether inspection data is normal by using the generated reduced feature extraction module and the memory bank,
wherein the generation of the reduced feature extraction module comprises:
training a feature extraction network using one or more pieces of first training data;
generating one or more pieces of feature patch data from one or more pieces of second training data using the trained feature extraction network; and
generating one or more pieces of the reduced feature data from the one or more pieces of feature patch data using a dimensionality reduction network.

15. A computer program stored in a computer-readable storage medium, wherein the computer program, when executed on a processor, causes the processor to perform the following operations for performing anomaly detection, the operations comprising:
an operation of generating a reduced feature extraction module;
an operation of generating a memory bank based on reduced feature data generated from the reduced feature extraction module; and
an operation of determining whether inspection data is normal by using the generated reduced feature extraction module and the memory bank,
wherein the operation of generating the reduced feature extraction module comprises:
an operation of training a feature extraction network using one or more pieces of first training data;
an operation of generating one or more pieces of feature patch data from one or more pieces of second training data using the trained feature extraction network; and
an operation of generating one or more pieces of the reduced feature data from the one or more pieces of feature patch data using a dimensionality reduction network.
